# EUROPÄISCHE PATENTSCHRIFT

(11) **EP 0 997 019 B1**
(45) Veröffentlichungstag und Bekanntmachung des Hinweises auf die Patenterteilung: **23.02.2005**
(21) Anmeldenummer: 98934852.9
(22) Anmeldetag: 03.06.1998
(51) Int. Cl.: H04L 12/56, H04Q 11/04

(54) **VERFAHREN ZUM OPTIMIEREN DER AUSLASTUNG AUF VERBINDUNGSABSCHNITTEN BEI ABR VERKEHR**
METHOD FOR OPTIMIZING LOAD IN LINK SEGMENTS IN ABR TRAFFIC
PROCEDE POUR OPTIMISER L'UTILISATION DE LA CAPACITE SUR DES SECTIONS DE LIAISONS DANS LE TRAFIC ABR

(30) Priorität: 17.07.1997 DE 19730760
(43) Veröffentlichungstag der Anmeldung: 03.05.2000
(73) Patentinhaber: SIEMENS AKTIENGESELLSCHAFT, 80333 München (DE)
(72) Erfinder: HEISS, Herbert, D-82008 Unterhaching (DE)
(86) Internationale Anmeldenummer: PCT/DE1998/001504
(87) Internationale Veröffentlichungsnummer: WO 1999/004535

(56) Entgegenhaltungen:
- GHANI N ET AL: "MEASUREMENT-BASED FLOW CONTROL FOR ABR SERVICES IN ATM NETWORKS" EUROPEAN TRANSACTIONS ON TELECOMMUNICATIONS, Bd. 8, Nr. 1, Januar 1997, Seiten 39-53, XP000643100
- ARULAMBALAM A ET AL: "ALLOCATION FAIR RATES FOR AVAILABLE BIT RATE SERVICE IN ATM NETWORKS" IEEE COMMUNICATIONS MAGAZINE, Bd. 34, Nr. 11, November 1996, Seiten 92-100, XP000636132

## Beschreibung

Die Erfindung betrifft ein Verfahren gemäß dem Oberbegriff des Patentanspruchs 1.

Bei Verbindungen, über die Informationen nach einem asynchronen Transfermodus (ATM) übertragen werden, sind eine Mehrzahl von Verbindungstypen definiert. So werden zum einen Verbindungen, mittels denen Informationen mit einer konstanten Bitrate (Constant Bit Rate, CBR) übertragen werden, von Verbindungen unterschieden, über die Informationen mit einer variablen Bitrate (Variable Bit Rate, VBR) übertragen werden.

Als weiterer Verbindungstyp sind Verbindungen zu nennen, mittels denen Informationen mit einer variablen Bitrate (Available Bit Rate, ABR) übertragen werden. Dabei handelt es sich um Verbindungen, über die Informationen mit niedriger Priorität zwischen einer Sendeeinrichtung und einer Empfangseinrichtung übertragen werden.

Zu diesem Zweck werden in den von der Sendeeinrichtung ausgehenden Strom von einer Verbindung zugehörigen ATM-Zellen in einem zeitlichen Raster Steuerzellen eingefügt. In der Regel ist dies etwa bei jeder 32. ATM-Zelle der Fall. Die ATM-Zellen werden nun zusammen mit den Steuerzellen der in Frage kommenden Empfangseinrichtung zugeführt. Diese entnimmt die die Nutzinformationen tragenden ATM-Zellen dem Zellenstrom. Zusätzlich hierzu werden die Steuerzellen entnommen und mit verbindungsbezogenen Daten sowie Daten über den aktuellen Zustand der Verbindungsabschnitte beschrieben der Sendeeinrichtung zurückgeleitet.Dort werden den Steuerzellen die verbindungsbezogenen Informationen entnommen und gegebenenfalls die Übertragungsrate angepaßt.

Zur Steuerung dieser Vorgänge ist im Informationsteil der Steuerzellen ein Feld ER vorgesehen (Explicit Rate Feld), das mit Informationen beschrieben wird, die von einem speziellen Steuerungsverfahren ermittelt werden.

In dem Vorschlag zum ATM Forum 96-1172 wird vorgeschlagen,ABR Verkehr zugehörige ATM Zellen nach Maßgabe eines dort offenbarten Steuerungsverfahrens (ERICA) zu steuern. Dabei wird hier von einer minimalen Zellenrate MCR = 0 ausgegangen. Dies bedeutet, daß die vom Steuerungsverfahrens (ERICA) berechnete explizite Rate ER unabhängig von der minimalen Zellenrate MCR ist,was aber bei der Vielzahl der Übertragungen einen Sonderfall darstellt.

Aus der Druckschrift "Measurement-Based Flow Control for ABR Services in ATM Networks, Nasir Ghani, John W. Mark, Department of Electrical and Computer Engineering, University of Waterloo, Waterloo, Ontario N2L 3G1-Canada, Vol. 8, Nr. 1, January-February 1997" ist eine Methode bekannt, wie durch Messen von ATM-Zellen das Netz besser ausgelastet werden kann. Hierbei wird eine Fairness angestrebt, die allerdings nicht proportional zur minimalen Zellenrate MCR ist. Daraus resultiert aber eine bestimmte Art von Fairness, die für praktische Gegebenheiten nicht immer effizient ist.

Aus der Druckschrift "Allocating Fair Rates for Available Bit Rate Service in ATM Networks, Ambalavanar Arulambalam and Xiaoqiang Chen, Bell Laboratories Nirwan Ansari, New Jersey Institute of Technology; IEEE Communications Magazine, November 1996", ist ebenfalls eine Methode zum Zuweisen von Bandbreite bekannt. Auch hier wird der bekannte Erika Algorithmus angesprochen, der für Überlastsituationen nur bedingt brauchbar ist.

Der Erfindung liegt die Aufgabe zugrunde, einen Weg aufzuzei gen, wie ABR Verkehr zugehörige ATM Zellen in effizienter Weise unter Berücksichtigung der minimalen Zellenrate gesteuert werden.

Die Erfindung wird ausgehend von den im Oberbegriff von Patentanspruch 1 angegebenen Merkmalen durch die Merkmale des kennzeichnenden Teils gelöst.

Vorteilhaft an der Erfindung ist insbesondere das Ermitteln von längerfristigen und kurzfristigen Lastverhältnissen auf den Verbindungsabschnitten. Dabei werden die längerfristigen Lastverhältnisse durch eine Größe ER_{fair} repräsentiert, die von der momentanen Last auf dem Link unabhängig ist. Mit der Größe ER_{fair} wird ein statistischer Wert gegeben, der auch bei hoher Auslastung der Verbindung zugeteilt werden kann. Die kurzfristigen Verhältnisse werden durch eine Größe ERₑₛₜᵢₘₐₜₑ repräsentiert. Dabei handelt es sich um eine Größe, die aufgrund einer Messung der Auslastung auf dem Link geschätzt wird.

Die Erfindung wird im folgenden anhand eines Ausführungsbeispiels näher erläutert.

Es zeigen
- FIG 1: eine Vorrichtung, auf der das erfindungsgemäße Steuerungsverfahren zum Ablauf gelangt
- FIG 2: das erfindungsgemäße Steuerungsverfahren

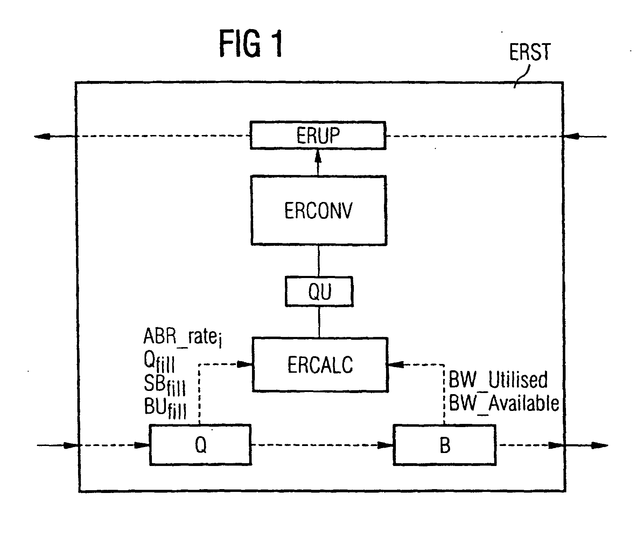

In Fig. 1 ist eine Vorrichtung aufgezeigt, auf der das erfindungsgemäße Steuerungsverfahren zum Ablauf gelangt. Demgemäß werden in einer Steuereinrichtung ERST ankommende ABR Zellen zunächst in einer als Speicher Q ausgebildeten Warteschlange kurzfristig zwischengespeichert. Währenddessen wird dem Zellenkopf die virtuelle Kanalnummer VCI bzw.die virtuelle Pfadnummer VPI entnommen. Da zu Beginn des Verbindungsaufbaus eine Zuordnung zwischen den Werten VCI/VPI und dem Verbindungstyp erstellt wurde, kann nun anhand der virtuellen Nummern VCI/VPI ermittelt werden, zu welchem Verbindungstyp die aktuelle Verbindung gehört. Insbesondere lassen sich damit ABR Verbindungen zugehörige ATM-Zellen verifizieren. Dies ist insofern ein wesentlicher Gesichtspunkt, da ATM-Zellen aller Verbindungstypen, also auch ATM-Zellen von CBR- oder VBR-Verkehr den Switch durchlaufen.

Bei der Ankunft von einer ABR Verbindung i zugehörenden ATM-Zellen wird gegebenfalls die Ankunftsrate ABR_rateᵢ ermittelt. Zusätzlich werden weitere direkt verbindungsbezogene Parameter gemessen. Hierzu gehören der aktuelle Füllstand der (verbindungsbezogenen) Warteschlange Q_{fill}, der aktuelle Füllstand der Schedulerblocks SB_{fill}, sowie der aktuelle Füllstand der als Summe der Schedulerblocks berechnete Parameter Bu_{fill}. Dabei wird unter dem Begriff Schedulerblock eine Gruppe von Verbindungen verstanden, über die jeweils ATM-Zellen geleitet und auf einen einzigen Verbindungsabschnitt oder virtuellen Pfad mit vorgegebener Spitzenbitrate gemultiplext werden. Nachdem eine solche Messung stattgefunden hat, werden die gemessenen Parameter einer Eingangswarteschlange der Vorrichtung ERCALC zugeführt.

Diese Parameter werden als Eingangsgröße für das Steuerungsverfahren SERA verwendet, welches in der Einrichtung ERCALC gesteuert wird. Nach dem Meßvorgang wird die einer ABR Verbindung zugehörige ATM-Zelle wieder nach Maßgabe eines statistischen Multiplexalgortihmus (z.B. Weighted Fair Queing) wieder freigegeben und einer weiteren Einrichtung B, die als Pufferspeicher ausgebildet ist, zugeführt. Dort wird eine Größe BW_utilised ermittelt, die die nicht verbindungsspezifische Auslastung auf dem Verbindungsabschnitt wiedergibt. Dies ist die momentane Rate, die der Schedulerblock für alle ABR Verbindungen des betreffenden Schedulerblockes verbraucht hat. Ferner wird hier eine Größe BW_available ermittelt, die die momentane Rate wiedergibt, die für die Summe aller ABR Verbindungen des betreffenden Schedulerblockes frei wäre. Diese Messungen werden am Ausgang zyklisch durch Schedulerblock-bezogene Events getriggert, während die eingangsseitigen Messungen durch verbindungsbezogene Events getriggert werden. Die (ausgangsseitig) gemessenen Werte werden in einer weiteren - in Fig. 1 nicht aufgezeigten - Eingangswarteschlange gespeichert und dem in der Einrichtung ERCALC ablaufenden Steuerungsverfahren SERA ebenfalls als Eingangsparameter zugeführt.

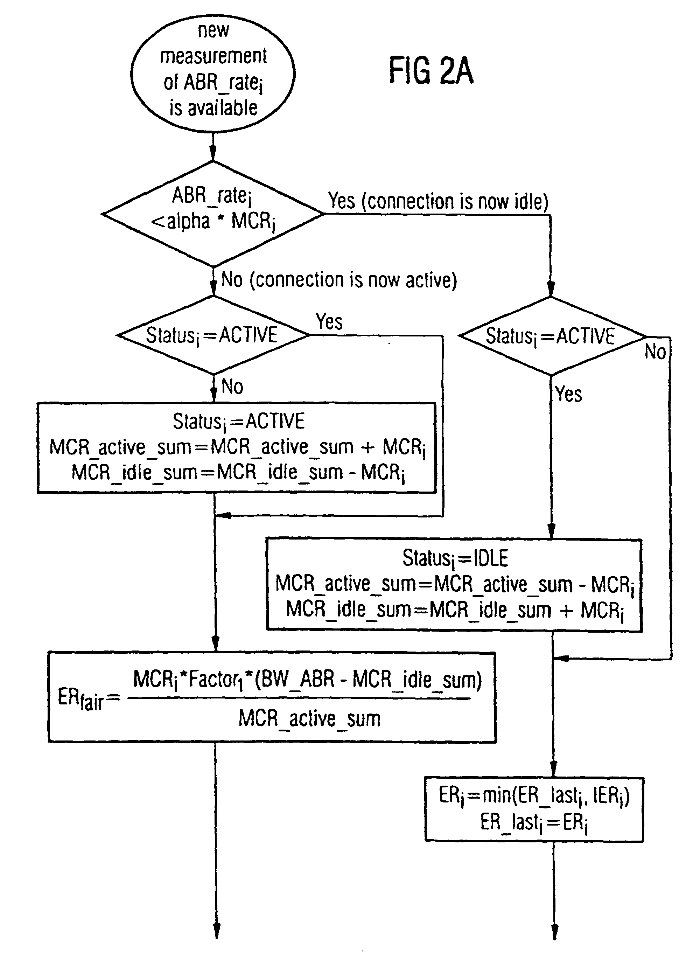

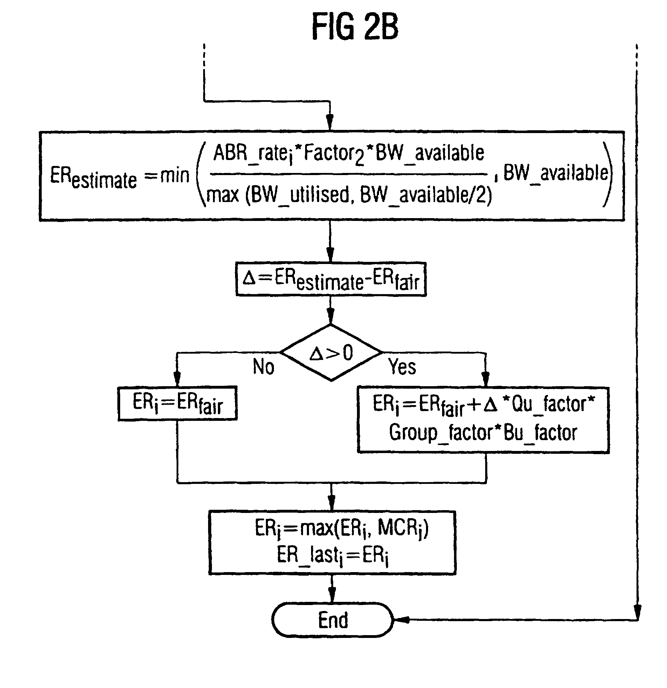

Im folgenden wird das Steuerungsverfahren SERA anhand des in Fig. 2 aufgezeigten Flußdiagrammes näher erläutert:
Generell ist anzumerken,daß das Steuerungsverfahren SERA einmal pro Verbindungsgruppe durchgeführt wird. Dabei werden lediglich ABR-Verbindungen verwendet. Jede ABR-Verbindung ist dabei genau in eine Verbindungsgruppe einklassifizierbar.Beispielsweise besteht eine Verbindungsgruppe aus einer Gruppe aller der Verbindungen, die derselben Ausgangsverbindung zugeordnet sind und deren Summenrate wenigstens gleich der Rate der Ausgangsverbindungen ist. Weiterhin kann sie bestehen aus einer Gruppe aller der Verbindungen, die demselben virtuellen Pfad zugeordnet sind und deren Summenrate höchstens gleich der Rate des virtuellen Pfades ist.

Das Steuerungsverfahren SERA benutzt eine minimale Zellenrate MCRᵢ pro Verbindung die strikt größer als 0 ist. Damit wird die durch das Steuerverfahren berechnete Größe (Explicit Cell Rate) ER für eine ABR-Verbindung größer oder gleich der minimalen Zellenrate MCRᵢ der Verbindung i.

Das Steuerungsverfahren SERA berechnet den Status einer Verbindung. Eine ABR-Verbindung ist inaktiv oder idle, wenn der zuletzt gemessene Wert ABR_rateᵢ der Verbindung i kleiner als alpha x MCRᵢ ist. Andernfalls wird dieser Verbindung der Wert aktiv zugewiesen. Dabei ist zu beachten, daß alpha strikt zwischen 0 und 1 liegt.

Das Steuerungsverfahren SERA enthält zwei Parameter pro Verbindunsgruppe. Dieses zum einen der Parameter MCR_idle_sum, der die Summe aller MCR's aller momentanen inaktiven ABR-Verbindungen einer Gruppe definiert. Der zweite Parameter ist der Parameter MCR_active_sum, der die Summe aller MCR's der aktiven ABR-Verbindungen einer Verbindungsgruppe definiert. Wenn eine ABR-Verbindung mit einer bestimmten minimalen Zellenrate MCR aufgebaut wird, wird sie als inaktiv (idle) betrachtet und der Parameter MCR_idle_sum wird um den Wert MCR erhöht. Wenn eine ABR-Verbindung abgebaut wird, wird der Parameter MCR_idle_sum mit dem Wert MCR vermindert, wenn die Verbindung inaktiv war und der Parameter MCR_active_sum wird mit dem Wert MCR vermindert, wenn die Verbindung aktiv war. Der Status einer Verbindung kann somit aktiv oder inaktiv (idle) sein, wobei die entsprechende Information in einem Statusbit geführt wird.

Das Steuerungsverfahren SERA bestimmt einen neuen Wert von ERᵢ, wann immer eine Messung des Parameters ABR_rate_i verfügbar wird. Eine Berechnung von ERᵢ kann aber auch aus anderen Gründen - z. B. bei Timerablauf - erfolgen.

Das Steuerungsverfahren SERA bestimmt zunächst den neuen Status einer ABR-Verbindung, indem der Wert ABR_rate_i mit dem Wert MCRᵢ verglichen wird. Die Verbindung hat einen neuen inaktiven Status (idle), wenn der Parameter ABR_rate_i kleiner als alpha x MCRᵢ. Andernfalls wird dieser Verbindung der neue Status aktive zugewiesen.

Wenn der Status der Verbindung von inaktiv auf aktiv wechselt, wird der Paramter MCR_idle_sum für die Verbindungsgruppe um den Wert MCRᵢ vermindert und der Prameter MCR_ active_ sum wird um den Wert MCRᵢ erhöht. Wenn der Status der Verbindung von aktiv nach inaktiv wechselt, wird der Parameter MCR_ active_ sum um den Wert MCRᵢ vermindert und der Parameter MCR_idle_ sum wird um den Wert MCRᵢ erhöht.

Das Steuerungsverfahren SERA benutzt für eine jede ABR-Verbindung den Wert einer anfangs ermittelten Explizit Cell Rate IERᵢ, die größer als der Wert MCRᵢ ist. Weiterhin werden hier für eine jede ABR-Verbindung ein Wert ER_lastᵢ des zuletzt berechneten Wertes ERᵢ gehalten. Der anfangs ermittelte Wert oder der Wert ER lasti beträgt IERᵢ.

Wenn der neue Status inaktiv ist, wird der Wert ERᵢ auf den kleinsten der Werte ER_lastᵢ und IERᵢ sowie der Wert ER_lastᵢ auf den soeben berechneten Wert ERᵢ gesetzt.

Wenn der neue Status aktiv ist, berechnet das Steuerungsverfahren SERA die Werte ER_{fair} und ERₑₛₜᵢₘₐₜₑ. Der dann zu verwendende Wert ERᵢ wird über den Wert ER_{fair} gesetzt und unter das Maximum der Werte ER_{fair} und ERₑₛₜᵢₘₐₜₑ.

Für die Berechnung des Wertes ER_{fair} hält das Steuerungsverfahren SERA für eine Verbindungsgruppe eine statische Bandbreite BW_ABR bereit. Diese ist verfügbar für alle ABR-Verbindungen in der Verbindungsgruppe. Der Wert BW_ABR wechselt lediglich beim Verbindungsaufbau oder- Abbau einer nicht ABR-Verbindung in der Verbindungsgruppe. Wenn eine Verbindungsgruppe einen Verbindungsabschnitt exklusiv benutzt und die Gruppe lediglich ABR-Verbindungen enthält, würde der Wert BW_ ABR gleich der Rate auf dem Verbindungsabschnitt sein. In gleicher Weise ist die Summe der MCRᵢ aller ABR-Verbindungen in der Gruppe stets kleiner dem Wert BW_ABR.

Zur Berechnung des Wertes ER_{fair} wird die Bandbreite, die für die aktiven Verbindungen reserviert ist, auf BW_ABR minus MCR_idle_sum gesetzt. Diese Rate wird multipliziert mit einer Konstanten Faktorl, die Werte zwischen 0 und 1 aufweist. Damit wird die verfügbare Rate für die aktiven Verbindungen reduziert. Die verbleibende Rate wird aufgeteilt auf die aktiven ABR-Verbindungen der Verbindungsgruppe, indem multiplikative Gewichte gleich MCRᵢ/MCR_active_sum aufsummiert werden auf eine Verbindungsgruppe. Dies bedeutet, daß der faire Anteil der Rate ER_{fair} für die aktive Verbindung i erhalten wird, indem die Konstante Faktor1 multipliziert wird mit (BW_ABR-MCR_idle_sum) mit MCRᵢ / MCR_active_sum.

Zur Berechnung des Parameters ERₑₛₜᵢₘₐₜₑ enthält das Steuerungsverfahren SERA die zuletzt gemessenen Werte des Parameters BW_utilised, der gerade von den ABR-Verbindungen der Verbindungsgruppe benutzt wird. Weiterhin wird hier die zuletzt gemessene Rate des Parameters BW_available gehalten, der gerade verfügbar ist für die ABR-Verbindungen innerhalb der Verbindungsgruppe. Der momentane Lastfaktor der Gruppe LF wird dann aus dem Verhältnis der Parameter BW_utilised / BW_ available gebildet. Um den Verbindungsabschnitt optimal zu nutzen, könnten alle ABR-Verbindungen ihre Rate um einen Faktor 1/LF erhöhen. Um ein Anwachsen großer Raten zu vermeiden, wird der Faktor gewählt als min(2, 1/LF)=min(2, BW_available/ BW_utilised) = BW_available/max(BW_utilised, Bw_available/2). Auch wenn der Wert ERₑₛₜᵢₘₐₜₑ größer ist als BW_ABR wird der Wert auf BW_available.

Zur Berechnung des Parameters ERₑₛₜᵢₘₐₜₑ multipliziert das Steuerungsverfahren SERA die gemessenen Werte ABR_rate_i mit einem Faktor Faktor2 und mit einem Faktor der gebildet wird aus min(2, BW_available/BW_ulilised) = BW_available/ max (BW_utilised, BW_available/2). Der Faktor Faktor2 ist ein konstanter Wert der sich zwischen 0 und 1 bewegt. Im folgenden wird dann das Minimum genommen zwischen den berechneten Werten ERₑₛₜᵢₘₐₜₑ und BW_ABR für eine Verbindungsgruppe und dieser Wert ersetzt dann den Wert von ERₑₛₜᵢₘₐₜₑ.

Wenn der Wert ERₑₛₜᵢₘₐₜₑ weniger oder gleich des Wertes ER_{fair} ist, dann wird ERᵢ aus ER_{fair} gesetzt.

Wenn der Wert ERₑₛₜᵢₘₐₜₑ größer als ER_{fair} ist, dann wird ERᵢ auf ER_{fair} + Faktor3 x(ERₑₛₜᵢₘₐₜₑ - ER_{fair}) gesetzt = ER_{fair} + Faktor3 x Delta. Der Faktor Faktor3 wird unten beschrieben. Er ist größer oder gleich 0 und kleiner oder gleich 1. Wenn der Faktor3 1 ist, dann wird ERᵢ zu ERₑₛₜᵢₘₐₜₑ.

Zur Bestimmung des Faktors Faktor3 multipliziert das Steuerungsverfahren SERA die Werte Qu_Faktor und Group_Faktor sowie Bu_Faktor. Zur Bestimmung des Wertes Qu_Faktor hält das Steuerungsverfahren die zuletzt gemessene Anzahl der Zellen Nᵢ, die sich für eine Verbindung i und eine Konstante N_large in einer Warteschlange befinden. Der Wert Qu_Faktor ist eine stetige, monoton steigende, stückweise lineare Funktion von Nᵢ. Er ist 0 für Nᵢ größer oder gleich N_large. Er ist gleich (N_large - Nᵢ) /N_large wenn Nᵢ kleiner als N_large ist.Er ist 1 für Nᵢ=0.

Bezüglich des Wertes Group_Faktor, hält das Steuerungsverfahren SERA die zuletzt gemessene Anzahl von Zellen Ngroup, die sich für die in Frage kommende Verbindungsgruppe in einer Warteschlange befinden und die die Verbindung i umfassen und eine Konstante N_group_large. Group_Faktor ist eine stetige, monoton steigende, stückweise lineare Funktion von Ngroup. Sie ist 0 für Ngroup größer als oder gleich N_group_large. Sie ist gleich (N_group_large - Ngroup) / N_group_large, wenn Ngroup kleiner oder gleich N_group-large ist. Sie ist 1 für Ngroup= 0.

Bezüglich des Wertes Bu_Faktor hält das Steuerungsverfahren SERA die zuletzt gemessene Anzahl von Zellen N_buffer die sich im Pufferspeicher in einer Warteschlange befinden und die von der Verbindungsgruppe aufgeteilt werden und einem konstanten Wert N_buffer_large. Bu_Faktor ist eine stetige, monoton steigende, stückweise lineare Funktion von N_buffer. Sie ist 0 für N_buffer größer oder gleich N_buffer_large. Sie ist gleich (N_buffer_large - N_buffer) dividiert durch N_buffer_large, wenn N_buffer kleiner oder gleich N_buffer_ large ist. Sie ist eins für 1 für N_buffer = 0.

Faktor3 ist dadurch charakterisiert, daß er den Wert 0 annimmt, wenn die Anzahl der Zellen im gesamten Puffer oberhalb des Wertes N_buffer liegt, oder wenn die Anzahl der Zellen im Puffer für die Verbindungsgruppe zugeordnet ist zu einer Verbindung i, die größer als die Zahl N_group ist, oder wenn die Nummer der Zellen im Puffer pro Verbindung i größer als N_large ist. Faktor3 ist 1 wenn der Puffer leer ist. Faktor3 ist in der Nähe von eins für einen niedrigen Speicherfüllstand pro Verbindung und Verbindungsgruppe und Puffer. Er ist in der Nähe von null für einen großen Speicherfüllstand pro Verbindung oder Verbindungsgruppe oder Puffer.

Nachdem der Wert ERᵢ berechnet ist, wird ERᵢ auf MCRᵢ erhöht, wenn ERᵢ kleiner als MCRᵢ ist. Ebenso wird der Wert ER_lastᵢ auf den soeben berechneten Wert ERᵢ gesetzt.

Als Ergebnis des Steuerungsverfahrens wird eine verbindungs-bezogene Zahl ERᵢ (Explicit Cell Rate) ermittelt, die die Rate wiedergibt, die der Switch für diese Verbindung zugeteilt hat. Sie wird in Zellen pro Sekunde ausgedrückt. Sie ist größer oder gleich der vorgegebenen minimalen Zellenrate MCRᵢ der Verbindung i und wird in der Einrichtung ERCALC sowie einer Warteschlange QU gespeichert, wobei die vorgegebene minimale Zellenrate MCRᵢ stets größer oder gleich 1 Zelle/sec ist. Das Speichern kann dabei in Form einer verketteten Liste erfolgen.

Um den derart ermittelten Wert einer der rückwärts übertragenen Steuerzellen zu übergeben bedarf es noch einer Umsetzung in ein Exponent/ Mantissen Format. Dies erfolgt in der Einrichtung ERCONV. In der Einrichtung ERUP wird dann der entsprechende Wert in den Informationsteil der rückübertragenen Steuerzellen bei Bedarf eingetragen.

Abschließend sei angemerkt, daß die Division durch den Faktor 2 zur Berechnung des Parameters (ERₑₛₜᵢₘₐₜₑ) als eine besondere Ausführungsform zu betrachten ist. Andere Ausführungsformen sind hier aber ebenso denkbar, da die Division durch 2 nicht zwingend erforderlich ist.

## Patentansprüche

1. Verfahren zum Optimieren der Auslastung auf Verbindungsabschnitten bei ABR Verkehr, mit
ABR Verkehr zugehörigen ATM-Zellen, die zwischen wenigstens einer Sendeeinrichtung und wenigstens einer Empfangseinrichtung über gemeinsame Verbindungsabschnitte, in die ein Switch eingebunden ist, übertragen werden, und deren Häufigkeit verbindungsindividuell durch den Speicherfüllstand von einem in dem Switch angeordneten Speicher (Q) gemessen wird,
**dadurch gekennzeichnet,**
**dass** eine Explicit Cell Rate (ERᵢ) verbindungsindividuell durch ein Steuerungsverfahren (SERA) ermittelt wird, indem ein erster Wert (ER_{fair}) ermittelt wird, der von der momentanen Last auf dem Verbindungsabschnitt unabhängig ist und der auch bei hoher Auslastung im Switch einer Verbindung zugeteilt wird, und
ein zweiter Wert (ERₑₛₜᵢₘₐₜₑ) ermittelt wird, der aufgrund der gemessenen Leitungsauslastung geschätzt wird, und
**dass** die Explicit Cell Rate (ERᵢ) größer oder gleich dem ersten Wert (ER_{fair}) und kleiner oder gleich dem Maximum der beiden Werte (ER_{fair} ERₑₛₜᵢₘₐₜₑ) ist, wobei die Explicit Cell Rate (ERᵢ) bei hohem Speicherfüllstand näher bei dem erstem Wert (ER_{fair}) und bei niedrigen Speicherfüllstand näher bei dem größeren der beiden Werte (ER_{fair}, ERₑₛₜᵢₘₐₜₑ) liegt, falls sich der erste Wert (ER_{fair}) von dem größeren der beiden Werte (ER_{fair}, ERₑₛₜᵢₘₐₜₑ) unterscheidet.

2. Verfahren nach Anspruch 1,
**dadurch gekennzeichnet,**
**daß** ABR Verbindungen in aktive oder inaktive (idle) Verbindungsklassen eingeteilt werden, indem ermittelt wird, ob die gemessene Häufigkeit (ABR_rateᵢ) kleiner als die verbindungsindividuellen Bandbreiten (MCRᵢ) multipliziert mit einem Faktor alpha ist,wobei letzterer strikt zwischen 0 oder 1 liegt.

3. Verfahren nach Anspruch 1, 2,
**dadurch gekennzeichnet,**
**daß** der erste Wert (ER_{fair}) ermittelt wird, indem von der verfügbaren Bandbreite (BW_ABR) die Summe der verbindungsindividuellen Bandbreiten (MCRᵢ) über die inaktiven Verbindungen subtrahiert wird, und die dann verbleibende Bandbreite unter den aktiven Verbindungen proportional zu der verbindungsindividuellen Bandbreite (MCRᵢ) derjeweiligen aktiven Verbindung aufgeteilt wird.

4. Verfahren nach einem der vorstehenden Ansprüche,
**dadurch gekennzeichnet,**
**daß** für inaktive Verbindungen die Explicit Cell Rate (ERᵢ) dem Minimum aus der zuletzt für die Verbindung berechneten Explicit Cell Rate (ERᵢ) und einem verbindungsspezifischen Wert (IERᵢ) gleichgesetzt wird.

5. Verfahren nach einem der vorstehenden Ansprüche,
**dadurch gekennzeichnet,**
**daß** für einen niedriger ausgelasteten Verbindungsabschnitt der zweite Wert (ERₑₛₜᵢₘₐₜₑ) gleich einem konstanten Faktor (faktor2) multipliziert mit der gemessenen Häufigkeit (ABR_rateᵢ) ist.

## Claims

1. Method for optimizing the load level on connection sections for VBR traffic, having ATM cells which are associated with VBR traffic and are transmitted between at least one transmitting device and at least one receiving device via common connection sections in which a switch is incorporated, and whose frequency is measured on a connection-specific basis by the filling level of a memory (Q) arranged in the switch,
**characterized**
**in that** an Explicit Cell Rate (ERᵢ) is determined on a connection-specific basis by a control method (SERA), in that a first value (ER_{fair}) is determined independently of the instantaneous load on the connection section and is assigned to a connection even when the load level in the switch is high, and
a second value (ERₑₛₜᵢₘₐₜₑ) is determined, which is estimated on the basis of the measured line load level, and
**in that** the Explicit Cell Rate (ERᵢ) is greater than or equl to the first value (ER_{fair}) and less than or equal to the maximum of the two values (ER_{fair}, ERₑₛₜᵢₘₐₜₑ), in which case, when the memory filling level is high, the Explicit Cell Rate (ERᵢ) is closer to the first value (ER_{fair}) and, when the memory filling level is low, it is closer to the larger of the two values (ER_{fair}, ERₑₛₜᵢₘₐₜₑ), if the first value (Er_{fair}) is not the larger of the two values (ER_{fair}, ERₑₛₜᵢₘₐₜₑ).

2. Method according to Claim 1,
**characterized**
**in that** VBR connections are split into active or inactive (idle) connection classes by determining whether the measured frequency (VBR_rateᵢ) is less than the connection-specific bandwidths (MCRᵢ) multiplied by a factor alpha, with the latter being strictly between 0 and 1.

3. Method according to Claim 1 or 2,
**characterized**
**in that** the first value (ER_{fair}) is determined by subtracting the sum of the connection-specific bandwidths (MCRᵢ) over the inactive connections from the available bandwidth (BW_VBR), and by splitting up the bandwidth which then remains among the active connections in proportion to the connection-specific bandwidth (MCRᵢ) of the respective active connection.

4. Method according to one of the preceding claims,
**characterized**
**in that** the Explicit Cell Rate (ERᵢ) for inactive connections is equated to the minimum of the last Explicit Cell Rate (ERᵢ) calculated for the connection and a connection-specific value (IERᵢ).

5. Method according to one of the preceding claims,
**characterized**
**in that**, for a connection section whose load level is relatively low, the second value (ERₑₛₜᵢₘₐₜₑ) is equal to a constant factor (factor2) multiplied by the measured frequency (VBR_rateᵢ).
BR_rateᵢ).

## Revendications

1. Procédé pour l'optimisation d'utilisation de capacité sur des sections de liaison pour le trafic ABR, comprenant
des cellules ATM spécifiques au trafic ABR, qui sont transmises entre au moins un appareil d'émission et au moins un appareil de réception au moyen de sections de liaison communes dans lesquels est intégré un switch, et dont la fréquence est mesurée de façon individuelle à la liaison par le niveau de remplissage de mémoire par une mémoire (Q) disposée dans le switch,
**caractérisé en ce qu'**un Explicit Cell Rate (ERᵢ) est calculé de façon individuelle à la liaison par un procédé de commande (SERA) en déterminant une première valeur (ER_{fair}) qui est indépendante de la charge momentanée sur la section de ligne et est attribuée à une liaison même avec une utilisation de capacité élevée dans le switch, et
en déterminant une seconde valeur (ERₑₛₜᵢₘₐₜₑ) qui est évaluée sur la base de l'utilisation de capacité de ligne mesurée,
et **en ce que** l'Explicit Cell Rate (ERᵢ) est supérieur ou égal à la première valeur (ER_{fair}) et inférieur ou égal au maximum des deux valeurs (ERfₐᵢᵣ ERₑₛₜᵢₘₐₜₑ), le Explicit Cell Rate (ERᵢ) se situant plus près de la première valeur (ER_{fair}) lors d'un niveau élevé de remplissage de mémoire et plus près de la plus grande des deux valeurs (ER_{fair}, ERₑₛₜᵢₘₐₜₑ) lors d'un niveau faible de remplissage de mémoire, lorsque la première valeur (ER_{fair}) se différencie de la plus grande des deux valeurs (ER_{fair}, ERₑₛₜᵢₘₐₜₑ).

2. Procédé selon la revendication 1, **caractérisé en ce que** des liaisons ABR sont divisées en classes de liaison actives ou inactives (idle) en déterminant si la fréquence mesurée (ABR_rateᵢ) est inférieure aux largeurs de bande (MCRᵢ) individuelles à la liaison multipliées par un facteur alpha, cet indice se situe de façon stricte entre 0 et 1.

3. Procédé selon les revendications 1, 2, **caractérisé en ce que** la première valeur (ER_{fair}) est calculée en soustrayant de la largeur de bande (BW_ABR) disponible le total des largeurs de bande individuelles à la liaison (MCRᵢ) des liaisons inactives et la largeur de bande alors restante est répartie entre les liaisons actives de façon proportionnelle à la largeur de bande (MCRᵢ) individuelle à la liaison de la liaison active respective.

4. Procédé selon l'une quelconque des revendications précédentes, **caractérisé en ce que**, pour des liaisons inactives, le Explicite Cell Rate (ERᵢ) est assimilé au minimum obtenu à partir du Explicit Cell Rate (ERᵢ) calculé en dernier pour la liaison et à une valeur (IERᵢ) spécifique à la liaison.

5. Procédé selon l'une quelconque des revendications précédentes, **caractérisé en ce que**, pour une section de liaison dont la capacité est utilisée plus faiblement, la seconde valeur (ERₑₛₜᵢₘₐₜₑ) est égale à un facteur constant (facteur2) multiplié par la fréquence mesurée (ABR_rateᵢ).
